# EUROPEAN PATENT SPECIFICATION

(11) **EP 2 314 002 B1**
(45) Date of publication and mention of the grant of the patent: **24.07.2013**
(21) Application number: 08786647.1
(22) Date of filing: 30.07.2008
(51) Int. Cl.: H04J 3/16, H04L 12/54

(54) **UPSTREAM EFFICIENCY IMPROVEMENT METHOD FOR PASSIVE OPTICAL NETWORKS**
VERFAHREN ZUR VERBESSERUNG DER UPSTREAM-EFFIZIENZ FÜR PASSIVE OPTISCHE NETZWERKE
PROCÉDÉ D'AMÉLIORATION DE RENDEMENT DANS LE SENS MONTANT POUR RÉSEAUX OPTIQUES PASSIFS

(43) Date of publication of application: 27.04.2011
(73) Proprietor: Nokia Siemens Networks Oy, 02610 Espoo (FI)
(72) Inventor: FREIRE, Mário, Marques, P-6200-330 Covilha (PT); GOMES, Joao, Vasco, Paulo, P-2720-093 Amadora (PT); INACIO, Pedro, Ricardo, Morais, P-6200-230 Aldeia de Carvalho (PT); MONTEIRO, Paulo, P-3930-209 Ilhavo (PT); PIRES, Joao, J., P-1400-391 Lissabon (PT); SANTOS, Joao, M., P-2720-129 Amadora (PT)
(86) International application number: PCT/EP2008/060020
(87) International publication number: WO 2010/012304

(56) References cited:
- EP-A1- 1 848 172
- EP-A2- 0 869 634
- CAMERON P ET AL: "Transport Multiplexing Protocol (TMux)" INTERNET CITATION, XP002149445 Retrieved from the Internet: URL:ftp://ftp.isi.edu/in-notes/rfc1692.txt > [retrieved on 2000-09-29]
- HANDLEY M: "GERM: GENERIC RTP MULTIPLEXING" INTERNET ENGINEERING TASK FORCE, XX, XX, 11 November 1998 (1998-11-11), pages 1-7, XP002139359

## Description

### Field of the Invention

The invention described herein applies to the area of telecommunications, specifically to the Passive Optical Networks (PONs) domain. Preferred embodiments of the invention apply to both dominant technologies of the aforementioned area:
1 Gbit/s Ethernet PON (EPON), as specified in the IEEE 802.3ah (and to the next-generation 10 Gbit/s EPON, to be standardized in IEEE 802.3av).
Gigabit capable PONs (GPONs), as specified in the G.984 ITU recommendation, operating at 1.25 and 2.5 Gbit/s (and probably to next-generation higher rate GPON implementations).

It should be understood, however, that the present invention is applicable to all packet-based networks wherein a medium is shared between a plurality of subscribers or network units in a time division multiplex scheme.

### Background of the Invention

The invention aims at improving the ratio between useful user data (usually termed "payload") and the overall data transmitted over a shared communications medium. Ideally, all data transmitted over the medium would be payload, however, data required for the management of the data transmission such as source and destination addresses, data type, data length, and other protocol-related data have to be transmitted alongside the payload. This additional data is also referred to as "overhead". Since channel bandwidth is fixed, it is generally desirable to maximise the ratio between the payload and the overall data (payload plus overhead) which implies that the overhead should be reduced as much as possible.

As indicated above, the invention is preferably applied to PONs wherein a plurality of Optical Network Units (ONUs) located at the subscribers' premises communicate with a single Optical Line Terminal (OLT) located at a Central Office (CO). Such PONs are generally deployed using a passive tree-and-branch or bus topology which implies that the physical medium, the optical fibre, is shared by the ONUs. In the downstream direction, the OLT broadcasts the Ethernet frames (also called "packets" herein) in a point-to-multipoint scheme. The Ethernet frames are extracted by the ONUs identified by a Logical Link IDentifier (LLID) transmitted within the frame which then forward the frames to the end-user identified by the frame destination Medium Access Control (MAC) address assigned to the end-user's network terminal. In the upstream direction, the ONUs must contend for access (in a multipoint-to-point regime) which usually is managed by Dynamic Bandwidth Allocation (DBA) algorithms dynamically assigning Time-Slots (TS) to the ONUs depending on the current network load originating from the ONUs.

Although less scalable and with no flexibility, a Fixed Slot Allocation (FSA) scheme can also be applied to distribute the upstream access, forcing each ONU to wait for its assigned time-slot to then transmit the frames that arrived from the end-users connected to it in the meantime. The time-slots are grouped in cycles so that every ONU has the possibility to transmit packets with reduced waiting time.

To enable the bandwidth management control of the upstream channel, the Multi-Point Control Protocol (MPCP) was specified in the EPON standard. This protocol has several important tasks, such as ONU synchronization and monitoring, and DBA information exchange. To grant an upstream TS, the OLT should be aware of the current ONU load. This task is achieved by a reporting mechanism where each ONU informs the OLT by sending a MPCP Report message indicating the current state of its buffers. Upon receiving the Report, the OLT grants a TS for the ONU by sending a MPCP Gate message, which includes the TS start time and duration. Using this scheduling scheme, each ONU is polled by the OLT to be allowed to transmit in the upstream channel. Since the Report/Gate message exchange can take some useful transmission time, an interleaved polling method is usually applied.

Once an upstream TS is granted, a virtual point-to-point connection is established between OLT and a given ONU. This means that during the TS duration, all the frames arriving at the OLT are transmitted by the same ONU. Since each ONU is only awarded a TS once in each cycle, there is a waiting period between every two cycles, logically and superiorly limited by the cycle size. This burst-mode transmission implies that the frames must be kept in the ONU buffers until the next TS start time is reached to start the upstream transmission.

The most prominent standards in the field of Passive Optical Networks are EPON and GPON:

### Ethernet PON (EPON)

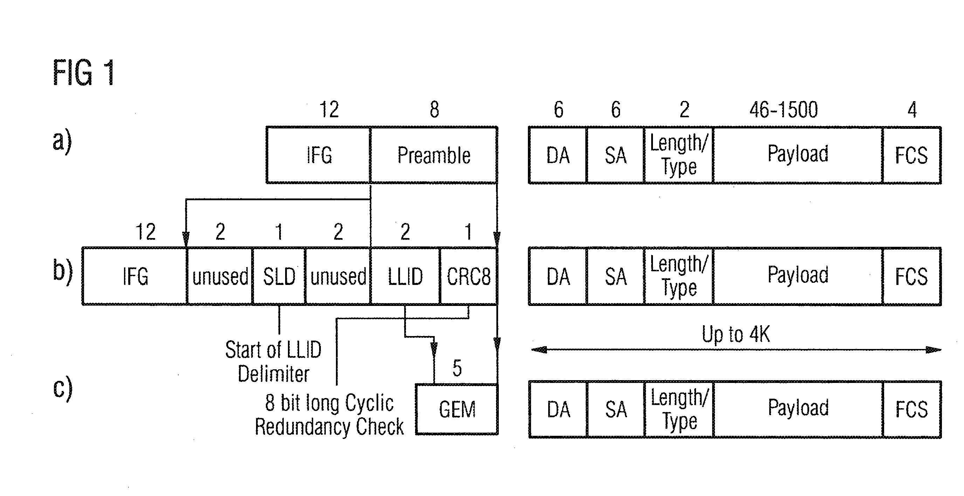

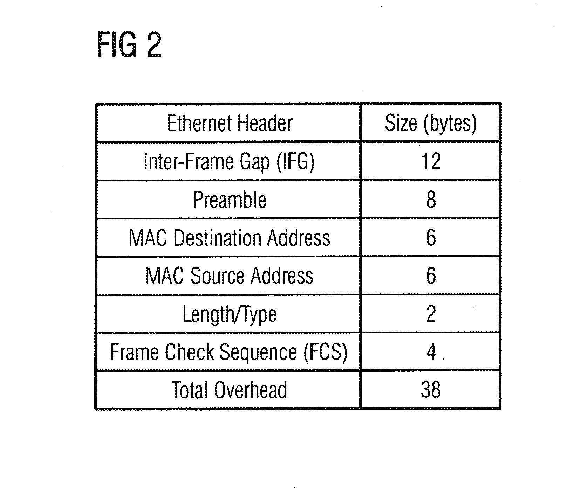

The data transported by the EPON is encapsulated in 1 Gbit/s Ethernet standard frames, as depicted in Fig. 1 a) and in more detail in Fig. 1 b), which are transmitted in both upstream and downstream EPON directions. To perform Medium Access Control (MAC) of every ONU connected to the OLT, a LLID is assigned to each Physical (or Logical) entity during a registration phase and added to the preamble of each individual Ethernet frame. The total overhead per Ethernet frame for 1G and 10G line bit rates is depicted in Figure 2.

The total amount of Ethernet frame headers transmitted in the EPON introduces inefficiency to the system. Currently, since the Ethernet frame payload (where the client data is transmitted) is inferiorly and superiorly limited to a size of 46 and 1500 bytes, respectively, this inefficiency can typically achieve 9% of the channel capacity. The total amount of user data that the network is able to support plays a significant influence in the number of customers (ONUs) that can be supported. Thus, the more the inefficiency is reduced, the economically more attractive a network becomes because more ONUs and thus more customers can be provided network services via a single PON.

### Gigabit capable PON (GPON)

Unlike EPONs, GPONs do not transmit standard Ethernet frames over the optical medium. The data coming from the non-optical interface ports (usually Ethernet frames) is encapsulated in GPON Encapsulation Method (GEM) frames before being sent to the passive part of the network. The Ethernet frames are stripped from the preamble and sent without Inter Frame Gaps (IFGs). This procedure lowers some of the overhead caused by Ethernet headers, since the aforementioned encapsulation substitutes a total of 20 bytes (12 bytes+8 bytes) by a GEM header of 5 bytes (see Figure 1 c)).

All the abovementioned EPON DBA mechanisms encounter their equivalent in any GPON implementation: the reports are sent in the upstream channel with the difference of being sent before each burst transmission (in the Dynamic Bandwidth Report upstream (DBRu) messages) and GATEs are included in the headers of each downstream p-frame. Logical identifiers are also found on such networks, serving the exact same purposes they serve in EPONs. The burst-and-wait feature is also present in GPONs.

ONUs are typically termed Optical Network Terminals (ONTs) in the GPON slang, nevertheless, in the remaining part of this document, as the invention applies to both types of systems, the term ONU will be used to refer to the two optical devices indifferently, unless something is said to the contrary. There are several further efforts to make the payload data transport more effective by reducing the framing overhead or by separating payload data and control data before sending them:
- The Internet Citation XP002149445 "Transport Multiplexing Protocol (TMux)" from Cameron et al discloses a protocol which allows multiple short transport segments, independent of application type, to be combined between a server and host pair in order to transfer a large number of small packets in a more efficient way.
- The IETF Memo "GeRM: Generic RTP Multiplexing" from Hand-ley describes an Real Time Protocol (RTP) payload format for generic multiplexing of multiple RTP streams.
- The European patent application EP0869634A2 "Wavelength-division multiplexing in passive optical networks" from Wright and Harrow discloses that control information in a passive optical network may be sent separately from the data-carrying optical signals.

### Summary of the Invention

The invention includes the insight that the wait-and-burst feature typical in PONs can be exploited in order to heavily reduce the inefficiency affecting the EPON upstream channel. It also relies on the fact that the header information of a plurality of the received packets is repeated. The efficiency of an optional payload compression is enhanced by a certain degree of similarity within the contents of the data units that can be expected due to correlation of a sequence of packets from the same communication stream.

### Short Description of the Figures

The invention will now be explained referring to a set of figures wherein
- Fig. 1: shows different Ethernet frame formats;
- Fig. 2: shows a table summarising the overhead introduced by Ethernet headers;
- Fig. 3: illustrates an embodiment of a composite EPON frame according to the invention;
- Fig. 4: illustrates an embodiment of a composite GPON frame according to the invention;
- Fig. 5: is a flow-chart of an aggregation procedure performed in the ONU; and
- Fig. 6: is a flow-chart of a de-multiplexing procedure carried out by the OLT.

### Detailed Description of the Invention

One important idea of the invention is to improve the efficiency of the upstream channel of a PON by reducing the overhead imposed by the Ethernet headers while taking advantage of the fact that the frames that arrive at a given ONU are being stored (and delayed) in queues waiting for their TS to come. According to the invention, instead of storing the complete frames, all the payloads belonging to a given communication flow (same source and destination MAC addresses, and same LLID) are gathered and a larger frame is constructed which is transmitted with a single MAC header and a global Frame Check Sequence (FCS). The OLT will then receive these aggregated frames (composite frames) and de-multiplex them into the common Ethernet frames before forwarding them.

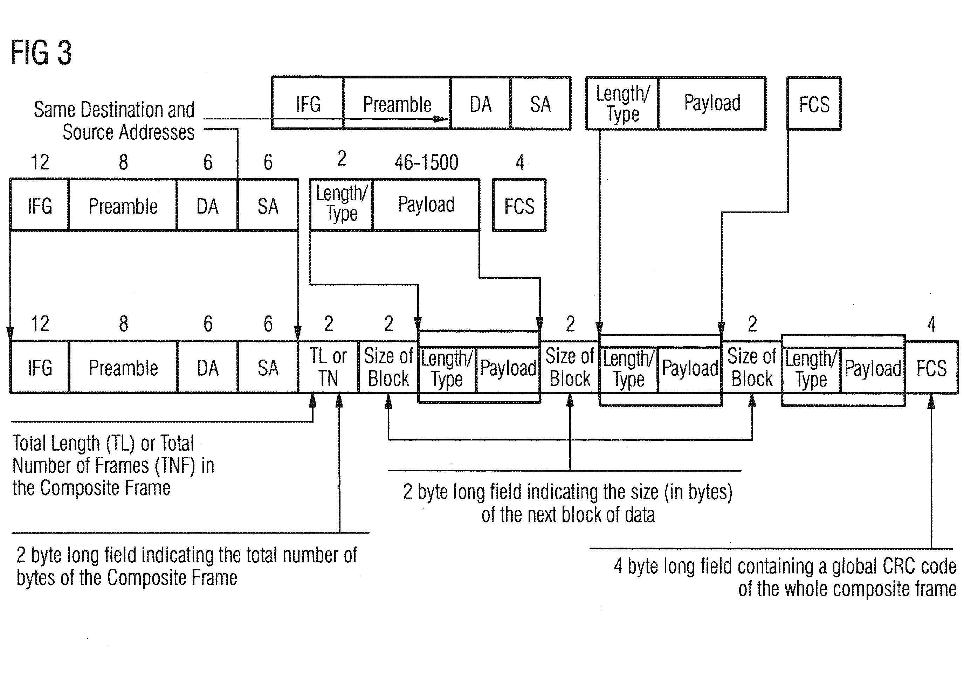

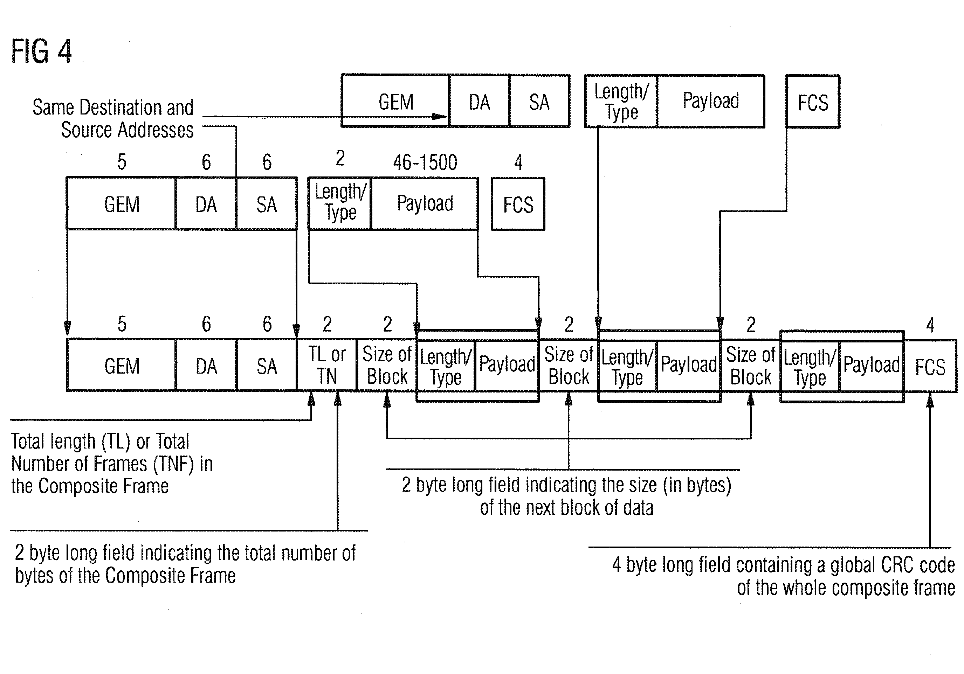

Another important aspect of the invention is the frame format that will carry the frames of a given communication flow identified by the pair of source/destination addresses. The proposed frame format, embodiments of which suitable for the EPON and GPON standards are depicted in Figs. 3 and 4, allows aggregation of Ethernet frames while reducing the overhead caused by the repetition of the information about the source and destination address, preamble, and IFG. Thus, the referred format, denoted herein as composite Ethernet frame or just by composite frame, defines a non-standard data structure divided by blocks that carry the legacy Ethernet frames payloads, and demarked by the fields that allow for the said structure to be as dynamic as possible (it can aggregate a variable number of variable length Ethernet frames up to a total size of 9KB for EPONs or 4KB for GPONs). Please notice that 9KB is the most popular maximum value for Ethernet Jumbo frames and that 4KB is the maximum GEM size, in the case of GPONs. However, the concept of the composite frame as such is not limited to certain sizes. The aforementioned limitations with regard to the maximum size of a composite frame are imposed by EPON and GPON. Accordingly, larger composite frames can be constructed on transmission systems allowing for larger frames.

As can be seen in Figs. 3 and 4, the composite Ethernet frame is similar to its reciprocal EPON and GPON frames, only this one contains some new fields, as the Size of Block (SB), and the Total Length (TL) or Total Number of Frames (TNF) fields, the SB indicating the size of the next block of data in the composite frame, the TL indicating the total length (in bytes) of the composite frame, and the TNF indicating the number of aggregated frames within the composite frame. Usually, only one of the TL and TNF will be used. The FCS, at the end of the frame, carries a 32 bit long CRC code calculated for the whole data structure. This optional FCS allows a quick check of the transmitted data for transmission errors. Of course, other checksums, hashes or related methods can be applied for this purpose, too. However, in a preferred embodiment a CRC32 code is used because it is sufficient to handle most of the errors in a 9KB long message while only occupying four bytes of data.

A second aspect of the invention concerns aggregation and de-multiplexing procedures. The aggregation procedure is usually carried out by the ONUs, and the de-multiplexing procedure by the OLT. Of course, the aggregation procedure can be advantageously applied to other network elements gathering data packets while waiting for a TS during which the collected data packets will be forwarded. In the aggregation process the device identifies two or more frames belonging to the same flow and constructs (or adds frames to) the composite frame by isolating the first Ethernet frame header and by stripping all the following from their FCS and addressing fields (see Figs. 3 and 4). Each time a new frame gets available to the ONU (Step 110), it first checks if a composite frame for the specific source/destination pair (and LLID in the EPON case) already exists (Step 120). If not, a new composite frame for the specific source/destination pair will be created (Step 150).

If no second incoming frame is detected for the same specific source/destination pair until the arrival of the TS, the unchanged single frame can be sent instead of a composite frame only comprising the single aggregated frame. Since in this case, both standard frames and composite frames are sent over the same communications link, it is useful to provide a type indicator which declares which type of frame a received frame belongs to. For compatibility reasons it is preferable to not mark the standard frames and only add a type indicator to the composite frames. Entries in the frame's preamble which are unused in standard frames could be used or a "magic", i.e. a specific predetermined number which is very unlikely to occur in a normal data stream, could be prepended (prefixed) to the aggregated blocks. In this manner it also becomes possible to selectively apply aggregation/de-multiplexing of frames to frames having a relatively low priority. This is advantageous because in this way high-priority data such as data belonging to real-time services (e.g. VoIP) will not be delayed by the additional processing that would be required for aggregation and de-multiplexing.

If a size limit for the composite frame exists, the procedure also checks whether the addition of the newly received block surpasses the maximum value (Step 130). If this is not the case, the block consisting of the new Ethernet frame payload plus type/length and block size field can be added to the composite frame (Steps 171 and 172), provided that a check for sufficient space in the TS is positive (Step 160); otherwise the filling of the TS finishes in Step 190. When the frame is added to the composite frame, the global FCS value, if present, should be also updated and the Total Length field incremented (Step 173).

If adding the frame to the composite frame surpasses the maximum value in Step 130, the FCS field is attached to the composite frame (Step 140) and a new composite frame is created to which the new frame may be added (Step 150). If a FCS is present, it is now appended to the end of the composite frame.

After the aggregation of the frame it is checked whether the TS is completely full (Step 180). If so, the procedure terminates in Step 190. If not, the procedure continues by branching back to Step 110 where a new frame is selected from a waiting queue.

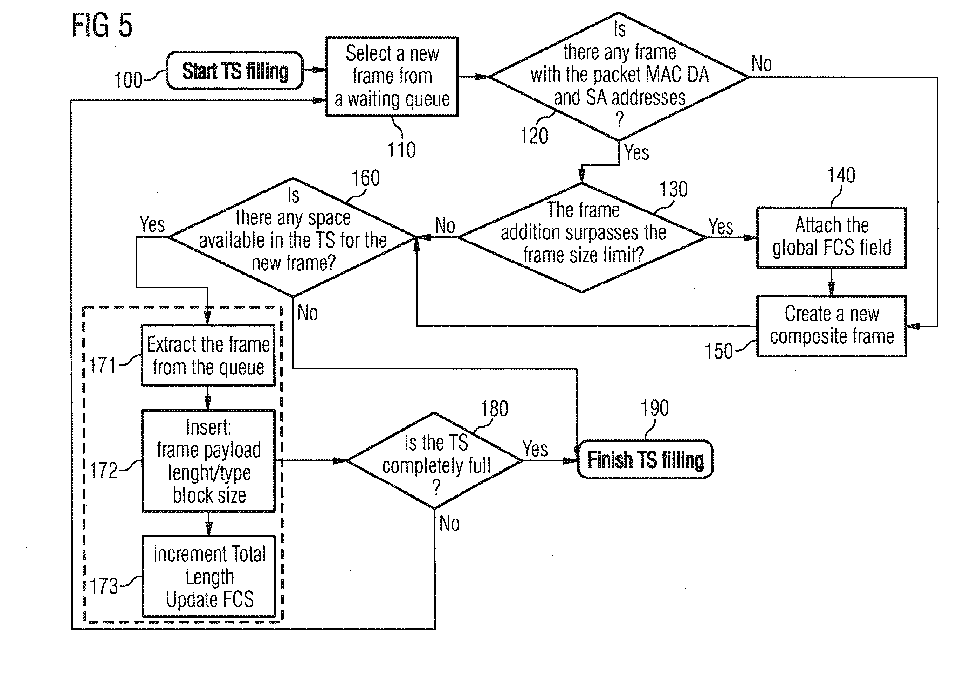

An embodiment of this algorithm is schematised in Figure 5.

It must be kept in mind that, in the case of EPONs, the logical addressing scheme (supported by the LLIDs) should be enforced by assuring the aggregation is made taking them into account also (especially in Step 120). In other words, a given composite frame should only carry individual frames that, additionally to the fact of sharing the same source/destination MAC addresses, also share the same origin LLID. In EPON implementations where an LLID is assigned exclusively to each ONU, the aggregation will be made on a per ONU basis, whereas in implementations where an LLID is assigned to individual queues or users, the aggregation will be made on a per queue or per user basis.

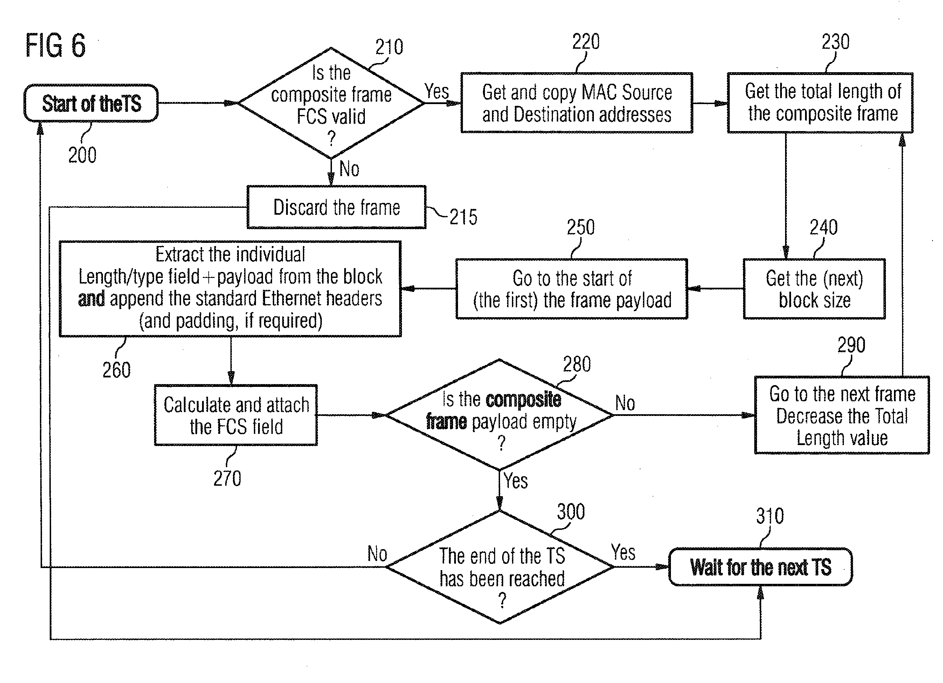

Once the composite frame is received at the OLT side, a de-multiplexing algorithm has to be applied in order to re-obtain the individual system compliant frames. This procedure is basically the inverse of the previously described one: first of all, the FCS of the composite frame has to be checked out (if present) in Step 210; if valid, the MAC destination address (DA) and source address (SA) can be read and stored in memory and the frame can be further processed (Step 220). The frame is discarded, else, (Step 215) and the TS finished (Step 310). The procedure gets all the blocks in the composite frame payload and appends to them the IFG plus Preamble (in the case of the EPON) or the GEM header in the case of the GPON and calculate the FCS for each newly reconstructed frame and adds it to the end of the data unit. A flow chart of a preferred embodiment of the de-multiplexing algorithm is shown in Figure 6. In more detail, in a Step 230 the total length of the composite frame or the total number of frames within the composite frame is determined which is then used in a loop of Steps 240, 250, 260, 270, 280, and 290. After the total length/total number of the composite frame has been determined, the size of the next block of data to be treated is determined (Step 240). The start of the block of data is determined (Step 250) and the payload plus the length/type field is extracted and appended to the standard Ethernet header generated for the specific pair of DA and SA (Step 260). The FCS field is calculated for the newly generated Ethernet frame and appended to it (Step 270). The present frame is thus completed and can be passed on to its destination. In Step 280 the composite frame is checked for further frames which can be done easily by referring to the total length or the total number field of the composite frame. If there are further frames within the composite frame, the total length / total number value is decreased by the size of the frame that has just been reconstructed or by one, respectively, (Step 290) and the procedure branches back to Step 230 where the next frame within the composite frame will be processed. If there is no further frame within the composite frame, the procedure continues with the next composite frame until it is determined in Step 300 that the end of the TS has been reached.

Having still in mind the idle time experienced by the ONUs while waiting for the TS, and aiming for the maximum data optimisation possible, a further embodiment of the invention includes application of a compression algorithm at the ONU and of a decompression algorithm in the OLT. Such mechanism should be applied to a composite frame after the aggregation was done taking advantage of the increased size of the obtained frame to achieve a higher compression ratio. As is known to a skilled person in the art, there are several high performance compression/decompression algorithms available which operate in an iterative manner, ideal for a fast network implementation. Since there is a certain probability that a sequence of frames directed to the same DA and originating from the same SA belong to a single communication, there is an increased likelihood that the data comprised in the individual frames share certain characteristics which can be exploited by compression algorithms. Thus, application of a compression algorithm to the composite frame is likely to yield a higher compression ratio than application of the same compression algorithm to each frame individually or to all data arriving at an ONU between two TS as a whole if the order of arrival is maintained unchanged. In a preferred embodiment of the invention the "size of block"- and "Length Type"-indicators are stored in sequence within the composite frame such that the remaining part of the composite frame will only comprise contiguous blocks of payload data extracted from a sequence of packets having the same source/destination addresses. In this way the compression ratio can be even more increased because packet sizes and length type-indicators have a high probability of being the same for a single communication stream. Furthermore, a large portion of the composite frame payload comprises only payloads collected from the stream of packets which usually leads to better compression ratios because there is only data of the same type in the large portion of the composite frame payload.

Simulations of a realistic network scenario indicate that the communication overhead in an EPON can be reduced from an average of 9% to only 1%. In other words, the effective maximum transmission bandwidth was raised from 91% to 99% of the channel capacity. Thus, the invention enables an EPON previously providing data services to 50 ONUs to now accommodate 54 ONUs. If compression is applied, the total improvement can reach up to 25%.

The invention provides the following advantages:
1. A higher bit rate is virtually achieved in the upstream channels of PON systems by the application of this invention, without actually changing the physical requirements of the optical part of the active devices of the network. However, this virtually higher bit rate "gets real" at the MAC layer of the OLT, that has to be capable of delivering a higher bit rate in the ports connecting to the Gateway in order to be compliant with this solution. The bandwidth efficiency improvement varies from 4% to 8% in both 1G and 10G EPON networks, when using only aggregation. Higher gains can be obtained by using compression.
2. Since this technique is applied in a per TS basis, it is possible to operate the same PON with both legacy ONUs (using the standard Ethernet frames) and the efficiency-improved ONUs (that use the composite framing method introduced here). If the OLT supports both framing methods, it can detect the ONUs that are capable of performing the efficiency-improving method and establish the respective upstream operation mode. Thus, if the ONU-OLT connectivity is well established and configured, some ONUs can transmit frames in their legacy format, while others can use the improved method. Thus, this invention embodies a perfect backward compatible system.
3. The Ethernet frames re-encapsulation method presented is transparent for all the PON users (both operators and end-users). This means that only modifications of the network end-points (ONUs and OLT) equipment are required while sub-networks connecting to the ONUs can remain unaltered.
4. The performance of the invention increases as the traffic load (i.e. number of frames per time unit) increases. The higher the load, the higher the compression and aggregation ratio.

### List of Abbreviations

- CRC: Cyclic Redundancy Check
- DA: Destination Address
- DBA: Dynamic Bandwidth Algorithm
- EPON: Ethernet Passive Optical Network
- FCS: Frame Check Sequence
- FSA: Fixed Slot Allocation
- GEM: GPON Encapsulation Method
- GPON: Gigabit Passive Optical Network
- IFG: Inter-Frame Gap
- LLID: Logical Link Identifier
- MAC: Medium Access Control
- OLT: Optical Line Terminal
- ONU: Optical Network Unit
- ONT: Optical Network Terminal
- SA: Source Address
- SB: Size of Block
- SLD: Start of LLID Delimiter
- TDMA: Time Division Multiple Access
- TL: Total Length
- TNF: Total Number of Frames
- TS: Time-Slot

## Claims

1. Method of data transmission in a network sharing a medium using a time division multiple access scheme wherein a network unit receives data packets from a subnetwork, stores the data packets in a buffer until the arrival of a time-slot and sends the data packets over the shared medium in the upstream direction during the time-slot, wherein each of the data packets includes a payload and a header, the header including a source address and a destination address, **characterized in that** the storing the data packets in the buffer includes further steps of:
determining a pair of a source address and a destination address of a received packet;
determining whether a composite frame having a composite frame header including the pair of source and destination addresses already exists;
if negative, creating the composite frame for the pair of source and destination addresses; and
aggregating the payload of the packet to a composite frame payload of the composite frame.

2. The method of claim 1, further including before the step of aggregating the payload of the packet to the composite frame payload, prepending the payload of the packet with a size indicator containing an information about the size of the payload of the packet.

3. The method of one of claims 1 or 2, further comprising a step of checking for a maximum size allowable for the composite frame, wherein the payload of the packet is only aggregated to the composite frame payload if the composite frame plus the payload of the packet does not exceed the maximum size.

4. The method of one of the preceding claims, further comprising a step of checking whether a remaining transmission time of the time-slot is sufficiently long for transmitting the composite frame plus the payload of the packet, wherein the payload of the packet is only aggregated to the composite frame payload if the time-slot is sufficiently long for transmitting the composite frame plus the payload of the packet.

5. The method of one of the preceding claims, further comprising a step of calculating a Frame Check Sequence (FCS) of the composite frame and a step of appending the FCS to the composite frame.

6. The method of one of the preceding claims, further comprising a step of compressing the composite frame payload.

7. The method of one of the preceding claims, further comprising a step of adding a type indicator to a composite frame header.

8. The method of claims 6 and 7, wherein the step of compressing the composite frame payload is only carried out for composite frames carrying data having a priority lower than a predetermined priority.

9. An network unit comprising means adapted to carry out the method of one of the preceding claims.

10. The network unit of claim 9, being an Optical Network Unit.

11. The method of one of the claims 1 to 8, the method comprising further steps of:
receiving the composite frame over the shared medium by a network unit
determining a pair of a source address and a destination address contained within the composite frame header;
determining a length of a first block of data contained in the composite frame payload;
extracting the first block of data from the composite frame payload;
constructing a first packet having a first packet header including the pair of source address and destination address and a payload including the first block of data;
forwarding the first packet;
repeating the steps of determining the length, extracting the block, constructing the packet, and fowarding the packet for a second block of data contained in the composite frame payload and a second packet.

12. The method of claim 11, further including a step of calculating a packet FCS for the packets and appending the FCS to the packets prior to forwarding the packets.

13. The method of one of claims 11 and 12, further including a step of checking a composite frame FCS prior to determining the pair of source address and destination address, wherein the remaining steps are only carried out if the composite frame FCS is found to be valid.

14. The method of one of claims 11 through 13, further including a step of decompressing the composite frame payload prior to extracting the first block of data.

15. Network units, e.g. an Optical Network Unit and an Optical Line Terminal, comprising means adapted to carry out the method of one of the claims 11 through 14.

## Patentansprüche

1. Verfahren zur Datenübertragung in einem Netz, das ein Medium unter Verwendung eines Zeitmultiplex-Vielfachzugriff-Schemas gemeinsam nutzt, wobei eine Netzeinheit Datenpakete von einem Unternetz empfängt, die Datenpakete in einer Puffereinheit bis zum Eintreffen eines Zeitschlitzes speichert und die Datenpakete über das gemeinsam genutzte Medium in die Aufwärtsstreckenrichtung während des Zeitschlitzes sendet, wobei jedes der Datenpakete Nutzdaten und einen Nachrichtenkopf enthält, wobei der Nachrichtenkopf eine Quellenadresse und eine Zieladresse enthält, **dadurch gekennzeichnet, dass** das Speichern der Datenpakete in dem Puffer folgende weitere Schritte umfasst:
Bestimmen eines Paars aus einer Quellenadresse und einer Zieladresse eines empfangenen Pakets;
Bestimmen, ob ein zusammengesetzter Rahmen, der einen Nachrichtenkopf, der ein Paar von Quellen- und Zieladressen enthält, eines zusammengesetzten Rahmens aufweist, bereits vorhanden ist;
falls negativ, Erzeugen des zusammengesetzten Rahmens für das Paar von Quellen- und Zieladressen; und
Zusammenfassen der Nutzdaten des Pakets zu Nutzdaten des zusammengesetzten Rahmens des zusammengesetzten Rahmens.

2. Verfahren nach Anspruch 1, das ferner vor dem Schritt des Zusammenfassens der Nutzdaten des Pakets zu den Nutzdaten des zusammengesetzten Rahmens das Voranstellen eines Größenindikators, der Informationen über die Größe der Nutzdaten des Pakets beinhaltet, vor die Nutzdaten des Pakets umfasst.

3. Verfahren nach Anspruch 1 oder 2, das ferner einen Schritt des Prüfens auf eine für den zusammengesetzten Rahmen zulässige maximale Größe umfasst, wobei die Nutzdaten des Pakets nur zu den Nutzdaten des zusammengesetzten Rahmens zusammengefasst werden, wenn der zusammengesetzte Rahmen plus die Nutzdaten des Pakets die maximale Größe nicht überschreiten.

4. Verfahren nach einem der vorhergehenden Ansprüche, das ferner einen Schritt des Prüfens, ob eine verbleibende Übertragungszeit des Zeitschlitzes zum Übertragen des zusammengesetzten Rahmens plus der Nutzdaten des Pakets ausreichend lang ist, umfasst, wobei die Nutzdaten des Pakets nur zu den Nutzdaten des zusammengesetzten Rahmens zusammengefasst werden, wenn der Zeitschlitz ausreichend lang zum Übertragen des zusammengesetzten Rahmens plus der Nutzdaten des Pakets ist.

5. Verfahren nach einem der vorhergehenden Ansprüche, das ferner einen Schritt des Berechnens einer Prüfsumme (FCS) des zusammengesetzten Rahmens und einen Schritt des Anfügens der FCS an den zusammengesetzten Rahmen umfasst.

6. Verfahren nach einem der vorhergehenden Ansprüche, das ferner einen Schritt des Komprimierens der Nutzdaten des zusammengesetzten Rahmens umfasst.

7. Verfahren nach einem der vorhergehenden Ansprüche, das ferner einen Schritt des Hinzufügens eines Typindikators zu einem Nachrichtenkopf des zusammengesetzten Rahmens umfasst.

8. Verfahren nach den Ansprüchen 6 und 7, wobei der Schritt des Komprimierens der Nutzdaten des zusammengesetzten Rahmens nur für zusammengesetzte Rahmen ausgeführt wird, die Daten transportieren, die eine Priorität aufweisen, die niedriger als eine vorgegebene Priorität ist.

9. Netzeinheit, die Mittel umfasst, die ausgelegt sind, das Verfahren nach einem der vorhergehenden Ansprüche auszuführen.

10. Netzeinheit nach Anspruch 9, die eine optische Netzeinheit ist.

11. Verfahren nach einem der Ansprüche 1 bis 8, wobei das Verfahren ferner die folgenden Schritte umfasst:
Empfangen des zusammengesetzten Rahmens über das gemeinsame verwendete Medium durch eine Netzeinheit;
Bestimmen eines Paars aus einer Quellenadresse und einer Zieladresse, das in dem Nachrichtenkopf des zusammengesetzten Rahmens enthalten ist;
Bestimmen einer Länge des ersten Datenblocks, der in den Nutzdaten des zusammengesetzten Rahmens enthalten ist;
Wiedergewinnen des ersten Datenblocks aus den Nutzdaten des zusammengesetzten Rahmens;
Konstruieren eines ersten Pakets, das einen ersten Paket-Nachrichtenkopf aufweist, der ein Paar aus Quellenadresse und Zieladresse enthält, und Nutzdaten, die den ersten Datenblock enthalten;
Weiterleiten des ersten Pakets;
Wiederholen der Schritte des Bestimmens der Länge, des Wiedergewinnens des Blocks, des Konstruierens des Pakets und des Weiterleitens des Pakets für einen zweiten Datenblock, der in den Nutzdaten des zusammengesetzten Rahmens und in einem zweiten Paket enthalten ist.

12. Verfahren nach Anspruch 11, das ferner einen Schritt des Berechnens einer Paket-FCS für die Pakete und Anfügen der FCS an die Pakete vor dem Weiterleiten der Pakete enthält.

13. Verfahren nach einem der Ansprüche 11 und 12, das ferner einen Schritt des Prüfens einer FCS des zusammengesetzten Rahmens vor dem Bestimmen des Paars aus Quellenadresse und Zieladresse enthält, wobei die verbleibenden Schritte nur ausgeführt werden, wenn festgestellt wird, dass die FCS des zusammengesetzten Rahmens gültig ist.

14. Verfahren nach einem der Ansprüche 11 bis 13, das ferner einen Schritt des Dekomprimierens der Nutzdaten des zusammengesetzten Rahmens vor dem Wiedergewinnen des ersten Datenblocks enthält.

15. Netzeinheiten, z. B. eine optische Netzeinheit und ein optischer Netzanschluss, die Mittel umfassen, die ausgelegt sind, das Verfahren nach einem der Ansprüche 11 bis 14 auszuführen.

## Revendications

1. Procédé de transmission de données dans un réseau partageant un support utilisant un schéma d'accès multiple par répartition dans le temps dans lequel une unité de réseau reçoit des paquets de données d'un sous-réseau, stocke les paquets de données dans un tampon jusqu'à l'arrivée d'un intervalle de temps et envoie les paquets de données sur le support partagé dans le sens montant pendant l'intervalle de temps, dans lequel chacun des paquets de données inclut une charge utile et un en-tête, l'en-tête incluant une adresse de source et une adresse de destination, **caractérisé en ce que** le stockage des paquets de données dans le tampon inclut en outre les étapes de :
détermination d'une paire d'une adresse de source et d'une adresse de destination d'un paquet reçu ;
détermination si une trame composite ayant un en-tête de trame composite incluant la paire d'adresses de source et de destination existe déjà ;
si négative, création de la trame composite pour la paire d'adresses de source et de destination ; et
agrégation de la charge utile du paquet à une charge utile de trame composite de la trame composite.

2. Procédé selon la revendication 1, incluant en outre, avant l'étape d'agrégation de la charge utile du paquet à la charge utile de trame composite, l'ajout à la charge utile du paquet d'un indicateur de taille contenant une information relative à la taille de la charge utile du paquet.

3. Procédé selon l'une des revendications 1 ou 2, comprenant en outre une étape de contrôle d'une taille maximum admise pour la trame composite, dans lequel la charge utile du paquet n'est agrégée à la charge utile de trame composite que si la trame composite plus la charge utile du paquet n'excèdent pas la taille maximum.

4. Procédé selon l'une des revendications précédentes, comprenant en outre une étape de contrôle si une durée de transmission restante de l'intervalle de temps est suffisamment longue pour transmettre la trame composite plus la charge utile du paquet, dans lequel la charge utile du paquet n'est agrégée à la charge utile de trame composite que si l'intervalle de temps est suffisamment long pour transmettre la trame composite plus la charge utile du paquet.

5. Procédé selon l'une des revendications précédentes, comprenant en outre une étape de calcul d'une Séquence de Contrôle de Trame (FCS) de la trame composite et une étape d'ajout de la FCS à la trame composite.

6. Procédé selon l'une des revendications précédentes, comprenant en outre une étape de compression de la charge utile de trame composite.

7. Procédé selon l'une des revendications précédentes, comprenant en outre une étape d'ajout d'un indicateur de type à un en-tête de trame composite.

8. Procédé selon les revendications 6 et 7, dans lequel l'étape de compression de la charge utile de trame composite n'est mise en oeuvre que pour des trames composites transportant des données ayant une priorité inférieure à une priorité prédéterminée.

9. Unité de réseau comprenant des moyens adaptés à mettre en oeuvre le procédé selon l'une des revendications précédentes.

10. Unité de réseau selon la revendication 9, étant une Unité de Réseau Optique.

11. Procédé selon l'une des revendications 1 à 8, le procédé comprenant en outre des étapes de :
réception de la trame composite sur le support partagé par une unité de réseau
détermination d'une paire d'une adresse de source et d'une adresse de destination contenues à l'intérieur de l'en-tête de trame composite ;
détermination d'une longueur d'un premier bloc de données contenu dans la charge utile de trame composite ;
extraction du premier bloc de données de la charge utile de trame composite ;
construction d'un premier paquet ayant un en-tête de premier paquet incluant la paire d'adresse de source et d'adresse de destination et une charge utile incluant le premier bloc de données ;
envoi du premier paquet ;
répétition des étapes de détermination de la longueur, d'extraction du bloc, de construction du paquet, et d'envoi du paquet pour un deuxième bloc de données contenu dans la charge utile de trame composite et un deuxième paquet.

12. Procédé selon la revendication 11, incluant en outre une étape de calcul d'une FCS de paquet pour les paquets et d'ajout de la FCS aux paquets avant l'envoi des paquets.

13. Procédé selon l'une des revendications 11 et 12, incluant en outre une étape de contrôle d'une FCS de trame composite avant la détermination de la paire d'adresse de source et d'adresse de destination, dans lequel les étapes restantes ne sont mises en oeuvre que si la FCS de trame composite est trouvée être valide.

14. Procédé selon l'une des revendications 11 à 13, incluant en outre une étape de décompression de la charge utile de trame composite avant l'extraction du premier bloc de données.

15. Unités de réseau, par exemple une Unité de Réseau Optique et un Terminal de Ligne Optique, comprenant des moyens adaptés à mettre en oeuvre le procédé selon l'une des revendications 11 à 14.
